# EUROPEAN PATENT APPLICATION

(11) **EP 4 672 729 A1**
(43) Date of publication of application: **31.12.2025**
(21) Application number: 24185427.2
(22) Date of filing: 28.06.2024
(51) Int. Cl.: H04M 3/533, H04M 3/537

(54) **METHOD AND VOICE MAIL SYSTEM**

(71) Applicant: Deutsche Telekom AG, 53113 Bonn (DE)
(72) Inventor: STEPANEK, Nicolas Walter, 64385 Reichelsheim (DE); THIES, Emil, 47166 Duisburg (DE)
(74) Representative: Blumbach · Zinngrebe Patentanwälte PartG mbB

(57) **Abstract**

A method is provided which comprises the steps of
a) placing a call from a calling party (100) to a called party (200),
b) forwarding the call to a voice mail system (430), which operates a voice mail box of the called party (200),
c) recording a voice message provided by the calling party (100) and storing the recorded voice message in the voice mail box of the called party (200), and
d) accessing the stored voice message by the called party (200), wherein

a copy of the recorded voice message is generated (651, 751) and access to the copy of
the recorded voice message is made available to the calling party (100)
and/or
in response to the voice message being accessed by the called party (200), generating a confirmation information accessible by the calling party (100).

## Description

The present invention is generally directed to voicemail systems and in particular to a method which comprises the steps of recording a voice message provided by a calling party, storing the recorded voice message in the voice mail box of the called party, and accessing the stored voice message by the called party, and to a voicemail system that is adapted to perform the method.

### Background

A voice mail system allows a calling party to leave a recorded message when the called party is unable to answer the phone. The calling party is prompted to leave a message and the called party can retrieve said message later. Voice mail systems typically comprise a user interface to select, play, and manage messages, a delivery method to either play or otherwise deliver the message, and a notification ability to inform the user of a waiting message, wherein these functions may be provided for various user devices, such as PCs or smartphones, utilizing various communication networks, such as cellular or landline-based networks.

Simple voicemail systems function as a remote answering machine using touch-tones as the user interface. More complicated systems may use other input devices such as voice or a computer interface. Simpler voicemail systems may play the audio message through the phone, while more advanced systems may have alternative delivery methods, including email or text message delivery, message transfer and forwarding options, and multiple mailboxes. Notification methods may vary based on the voicemail system. Simple systems may not provide active notification at all, instead requiring the recipient to check with the system, while others may provide an indication that messages are waiting.

US 11399098 B2, for example, describes systems and methods for delivery of voicemails to handheld devices, which allow random access to voice messages and which employ voice recognition to enhance usability.

### Summary of the Invention

It is an object of the present invention to show a way to improve voicemail system and/or to extend the functionality of a voicemail system. In particular, it is an object of the present invention to provide an improved and/or enhanced method for managing voice messages in a voicemail system and to provide a respectively improved and/or enhanced voicemail system.

A core aspect of the present invention can be seen in that a confirmation information is generated, when a voice message has been accessed by the called party, and in that this confirmation information is accessible by the calling party.

That way a calling party who leaves a recorded voice message on a voicemail system is advantageously informed, when his recorded message has reached the intended recipient, i.e. the called party. In voicemail systems known in the prior art, a calling party can leave a voice message, but never knows whether his or her message has been accessed by the called party at all.

Accordingly, a method is provided which comprises the following steps:
a) placing a call from a calling party to a called party,
b) forwarding the call to a voice mail system, which operates a voice mail box of the called party,
c) recording a voice message provided by the calling party and storing the recorded voice message in the voice mail box of the called party, and
d) accessing the stored voice message by the called party.

The method further comprises that a copy of the recorded voice message is generated, in particular in response to storing the recorded voice message in step c), and access to the copy of the recorded voice message is made available to the calling party, and/or that, in response to the voice message being accessed by the called party, a confirmation information is generated that is accessible by the calling party.

The calling party may use any kind of telecommunications end device for placing the call, such as an analog telephone, an ISDN telephone, a mobile phone, a smartphone, or a softphone. Preferably, a VoIP-capable end device may be utilized. The call typically is signaled at one or more end devices associated with the called party for indicating the incoming call to the called party, e.g. by means of a ringing signal.

If the called party does not take the call, after a defined amount of time, the call is forwarded to a voice mail system, which operates a voice mail box of the called party. It is noted, however, that of course there are further call forwarding conditions, which may have the effect that the call is forwarded to the voice mail system. Typical call forwarding conditions comprise CFU (Communication Forwarding Unconditional), CFB (Communication Forwarding on Busy user), CFNR (Communication Forwarding on no Reply), CFNRc (Communication Forwarding on Subscriber Not Reachable) and CFNL (Communication Forwarding on Not Logged-in).

When the calling party is connected to the voice mail system, the voice mail system typically makes an announcement, i.e.it outputs a pre-recorded audio message to the calling party, and after that, voice mail system is recording the calling party's voice message. The recorded voice message is then stored in the voice mail box of the called party. After recording and storing the voice message, the voice mail system may signal the called party that there is a new voicemail message. For this purpose, the voice mail system may transmit an SMS to a terminal device of the called party, or it may transmit a push notification to an application or to the operating system of an end device of the called party.

At some later time, the called party accesses the stored voice message, wherein for this purpose, the called party may use an application installed on an end device or an application of the operating system of an end device to request access to the message.

The request is transmitted to the voice mail system, which in response transmits the stored voice message to the end device of the called party, so that the called party can hear it on the end device. Alternatively, the called party may call the voice mail system from an end device, wherein typically an IVR (Interactive Voice response) is provided for managing and playing back stored voice messages.

The method in particular proposes that in response to the voice message being accessed by the called party, a confirmation information is generated, which is accessible by the calling party. This provides the advantage that the calling party is informed, when his recorded message has reached the intended recipient, i.e. the called party.

Several ways are proposed, how the confirmation information may be provided or accessed by the calling party, which are described in detail below. For example, the method may comprise transmitting a push information to the calling party, in particular in the form of a push notification.

Preferably, in addition to generating a confirmation information, which is accessible by the calling party, when the voice message has been accessed by the called party, a copy of the recorded voice message may be generated, wherein access to the copy of the recorded voice message is made available to the calling party. That way, the calling party has the possibility to check the voice message that he or she has left in the voice mail box of the called party. In a preferred variant, a copy of the recorded voice message may be stored in a voice mail box of the calling party.

If the calling party and the called party are associated with the same telecommunications provider, the voice mail system of the telecommunications provider associated with the called party may preferably copy the voice message stored in the voice mail box of the called party and store it in the voice mail box of the calling party.

If the calling party and the called party are associated with different telecommunications providers, the voice mail system of the telecommunications provider associated with the called party may preferably copy the voice message stored in the voice mail box of the called party and provide the copy of the recorded voice message to the calling party.

The copy of the recorded voice message may be transmitted to a voice mail system of the telecommunications provider associated with the calling party via a standardized interface, wherein the copy of the recorded voice message is stored in the voice mail box of the calling party. Alternatively, the copy of the recorded voice message may be transmitted to the calling party within a message, wherein the copy of the recorded voice message is stored in a device of the calling party, and wherein the message preferably is transmitted using a transmission channel based on Rich Communication Services enhanced (RCS-e),Multimedia Messaging Service (MMS), e-mail, in particular using an e-mail attachment, or Over-the-Top (OTT) Messaging.

In order to link the copy of the recorded voice message to the original recorded voice message, both are associated using an identification information. Preferably, the identification information may be stored together with the original recorded voice message in the voice mail system associated with the called party, together with the copy of the recorded voice message in the voice mail system associated with the calling party, and/or in a device of the calling party. Preferably, the identification information is part of the confirmation information that is made accessible to the calling party.

As described above, various transmission channels may be utilized to transmit the copy of the recorded voice message to the calling party. Therefore, the voice mail system associated with the called party advantageously stores, together with the recorded voice message, a channel information, which identifies the type of transmission channel used to transmit the copy of the recorded voice message and/or used to transmit the confirmation information to the calling party.

Preferably, a transmission channel to be used to transmit the copy of the recorded voice message and/or to transmit the confirmation information may be identified by the voice mail system associated with the called party by looking up the calling party's phone number in an online address book, said online address book being associated with the called party. If resolving the calling party's phone number in the online address book of the called party yields several usable transmission channels, e.g. an e-mail address associated with the calling party's phone number usable for e-mail communication or the information that a particular instant messaging service is supported by the calling party, the transmission channel may be selected based on pre-defined priorities which are associated with the respective transmission channels.

If the calling party no longer has access to the copy of the recorded voice message, because the calling party for example has already deleted the copy of the recorded voice message, preferably a further copy of the recorded voice message is generated and access to the further copy of the recorded voice message is made available to the calling party, when, in response to the voice message being accessed by the called party, the confirmation information is generated that is made accessible to the calling party. That way, the reference for the status update is directly provided together with the status update, i.e. the confirmation information that the recorded voice message has been accessed by the called party.

Alternatively, in the case that the calling party no longer has access to the copy of the recorded voice message, e.g. the calling party already deleted it, it may also be preferred not to generate a confirmation information in response to the voice message being accessed by the called party, since there would be no longer a reference for this information.

Preferably, the information that the calling party no longer has access to the copy of the recorded voice message may be automatically provided to the voice mail system of the telecommunications provider associated with the called party, either from the voice mail system of the telecommunications provider associated with the calling party or from a user device of the calling party. If the calling party and the called party are associated with different telecommunications providers, the information may be provided via a standardized interface connecting the respective voice mail systems or via a message transmitted to the voice mail system of the telecommunications provider associated with the called party.

Further, a voice mail system is proposed, which is adapted to record a voice message provided by a calling party and to store the recorded voice message in a voice mail box of a called party, wherein the voice mail box of the called party is operated by the voice mail system, wherein the voice mail system is adapted to generate a copy of the recorded voice message and to provide access to the copy of the recorded voice message to the calling party, and/or the voice mail system is adapted to generate, in response to the voice message being accessed by the called party, a confirmation information accessible by the calling party.

The voice mail system preferably is adapted for performing the above-described method. Accordingly, the voice mail system preferably is adapted to transmit a push information to the calling party, in particular in the form of a push notification.

Furthermore, the voice mail system preferably is adapted to generate a copy of the recorded voice message, and to provide access to the copy of the recorded voice to the calling party.

For this purpose, the voice mail system may with advantage be adapted to store a copy of the recorded voice message in a voice mail box of the calling party, if the calling party and the called party are associated with the same telecommunications provider. The voice mail system may further be adapted to transmit, via a standardized interface, a copy of the recorded voice message to a voice mail system of a telecommunications provider associated with the calling party, if the calling party and the called party are associated with different telecommunications providers. Further, the voice mail system may with advantage be adapted to transmit a copy of the recorded voice message to the calling party within a message, wherein for transmitting the message a selected one of various transmission channels may be used, wherein transmission channels that may be utilized for example may be based on Rich Communication Services enhanced (RCS-e), Multimedia Messaging Service (MMS), e-mail, in particular using an e-mail attachment, or Over-the-Top (OTT) Messaging.

Furthermore, the voice mail system preferably is adapted to generate and store an identification information, which is associated with the recorded voice message and with the copy of the recorded voice message, and to store the identification information together with the copy of the recorded voice message in the voice mail box of the calling party and/or to transmit the identification information together with the copy of the recorded voice message.

For practical purposes, the voice mail system preferably is adapted to store, together with the recorded voice message, a channel information, which identifies the type of transmission channel used to transmit the copy of the recorded voice message.

Preferably, the voice mail system may further be adapted to identify a transmission channel to be used to transmit the copy of the recorded voice message and/or to transmit the confirmation information by looking up the calling party's phone number in an online address book, wherein the online address book is associated with the called party. For this purpose, the called party preferably grants access to the online address book to the voice mail system.

Further, the voice mail system may with advantage be adapted to receive an information indicating that the calling party no longer has access to the copy of the recorded voice message, for example because the calling party has already deleted the copy of the recorded voice message, wherein this information may be received from another voice mail system, i.e. the voice mail system associated with the calling party, or from a user device of the calling party.

If the voice mail system has received the information indicating that the calling party no longer has access to the copy of the recorded voice message, the voice mail system may preferably respond to the recorded voice message being accessed by the called party in one of two possible ways, it may either generate a second copy of the recorded voice message and provide it together with the confirmation information, or it may refrain from providing a confirmation information.

Accordingly, the voice mail system preferably is adapted to generate a further copy of the recorded voice message and to provide access to the further copy of the recorded voice to the calling party, when, in response to the voice message being accessed by the called party, the confirmation information is generated that is accessible by the calling party, and/or to generate no confirmation information in response to the voice message being accessed by the called party. In what way the voice mail system shall respond in such a case may preferably be user-definable, either by the calling party or by the called party.

### Brief Description of the Drawings

The invention is described in detail below by way of preferred embodiments in connection with the accompanying drawings, wherein
- Fig. 1: schematically shows an exemplary message flow diagram of a known voice mail system according to prior art,
- Fig. 2: schematically shows an exemplary message flow diagram of a first variant of a method for managing voice mail messages, wherein the calling party and the called party are associated with the same telecommunication network provider and with the same voice mail system,
- Fig. 3: schematically shows an exemplary message flow diagram of a second variant of a method for managing voice mail messages, wherein the calling party and the called party are associated with different telecommunication network providers, and wherein the voice mail systems of the providers are interconnected via a gateway,
- Fig. 4: schematically shows an exemplary message flow diagram of a third variant of a method for managing voice mail messages, wherein the calling party and the called party are associated with different mobile network providers, and wherein the voice mail systems of the providers are not interconnected, and
- Fig. 5: schematically shows an exemplary message flow diagram of a fourth variant of a method for managing voice mail messages, wherein the calling party is associated with a non-mobile network provider.

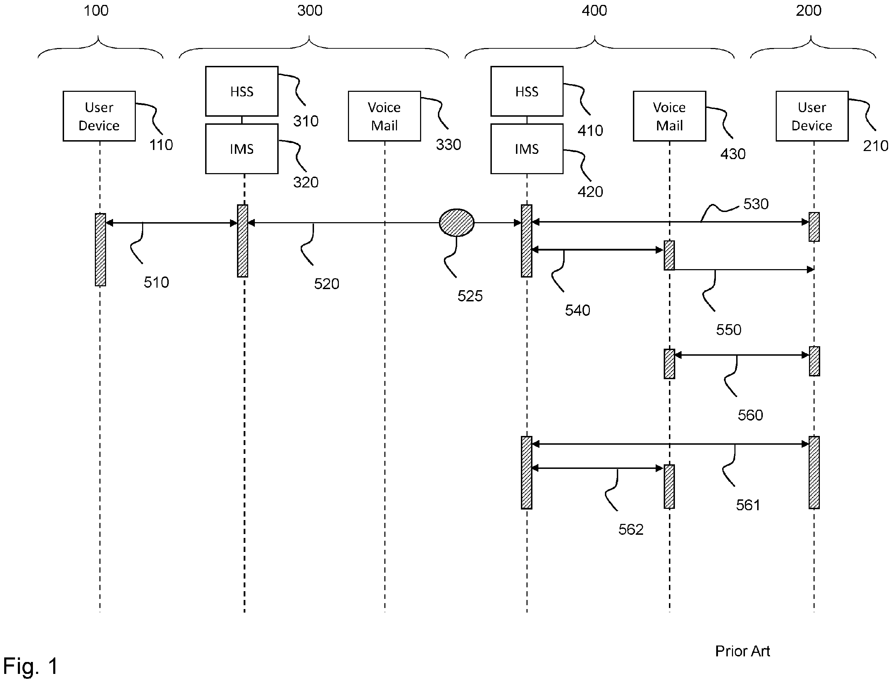

In Fig. 1, the current state of the art of voice mail systems is exemplarily illustrated. In the shown example, a calling party 100 is calling a called party 200, using the user device 110, which in the shown example may be a mobile telecommunications end device, for example a smartphone.

The network operated by telecommunications provider 300, in the following also referred to as telecommunications network operator, in the shown example comprises an IP multimedia subsystem 320, also called IMS system, and a home subscriber server (HSS) 310, which is accessible by the IMS system 320 or which may be part of the IMS system 320. The IMS 320 is a telecommunications system that uses an all-IP network in which all communication is IP-based, wherein the basic protocol of IMS is SIP. IMS systems are primarily used in mobile networks. Hence, the network operated by telecommunications provider 300 preferably comprises a mobile network. An IMS typically is adapted to connect mobile networks and conventional analog or digital telephone networks with IP-based networks that use Voice over IP. Further, an IMS typically provides connection to service platforms, such as RCS. The HSS is a master user database that supports the IMS network entities that actually handle calls. It contains the subscriber profiles, performs authentication and authorization of users, and can provide information about a subscriber's location and IP information. In the shown example, the network operated by telecommunications provider 300 further comprises a voice mail system 330.

The network operated by telecommunications provider 400 is similar to the network operated by telecommunications provider 300, which serves the calling party 100, and accordingly comprises an IMS system 420, a HSS 410 and a voice mail system 430, but only serves the called party 200. In the shown example, the networks operated by telecommunications providers 300 and 400 are interconnected by means of a gateway 525, which may be provided as a VoIP-Gateway.

In the following, the general working principle of a voice mail system is illustrated with reference to Fig. 1. It is to be noted that in the Figures 1 to 5 the communication is illustrated in a schematic and simplified manner, wherein for example signaling messages that are exchanged between the devices and that are used for establishing a call connection are not individually depicted in detail. Rather, the general communication steps are illustrated.

A calling party 100 is calling another party 200, i.e. the called party, using the device 110 connected with the network of operator 300, which is interconnected with the network of operator 400, which is transmitting the call to the device 210 of the called party 200.

The user devices 110 and 210 may for example be VoIP capable devices, such as a telephone or a computer, or VoLTE capable mobile devices. The signaling for establishing the call may accordingly be performed using the Session Initiation Protocol SIP. Thus, in communication step 510 the calling device 110 initiates the call by transmitting a session request message to the IMS 320, comprising the address of the called device 210, i.e. for example the respective phone number. In communication step 520, the session request message is then transmitted from the IMS 320 via the gateway 525 to the IMS 420 and from there in communication step 530 to the user device 210 of the called party 200. The user device 210 signals the incoming call to the user, for example by ringing.

For the called party 200, call forwarding to the voice mail system 430 may be configured for various call forwarding conditions. For example, for the case that the called party 200 does not answer the call, it may be configured that after a defined amount of time, in communication step 540 the call is forwarded to the voice mail system 430, which operates a voice mail box of the called party 200 and the voice mail system answers the call, thereby establishing a connection. After the connection has been established, the voice mail system 430 typically makes an announcement to the calling party 100 and thereafter it records a voice message provided by the calling party 100.

When the calling party 100 has finished the voice message, it typically terminates the call connection, in response to which the voice mail system 430 stores the recorded voice message in a voice mail box of the called party 200. The call connection may also be terminated by the voice mail system 430, for example if a pre-defined maximum duration of a voice message has been reached.

When a new voice message has been recorded and stored, the voice mail system 430 typically informs the called party 200 about it. This may be done for example by transmitting, in communication step 550, a message from the voice mail system 430 to the user device 210 of the called party 200, using for example SMS (Short Message Service). Alternatively, the voice mail system 430 may also transmit a push notification to the user device 210, said push notification being processed by an application that is installed on the user device 210 or that is integrated in the operating system of the user device 210.

The called party 200 can access the voice mail system 430 in communication step 560 to request a recorded message that is stored in the voice mail box of the called party 200 and hear it on the device 210. For this purpose, the called party 200 may use the application that received the push notification, i.e. an application which may be installed on the user device 210 or may be integrated in the operating system of the user device 210. The application communicates with the voice mail system 430 and typically provides an audio output to the user of device 210, wherein the audio output sequentially provides information on recorded messages, wherein the user may initiate playback by providing a respective input. The application may also be a visual voicemail (VVM) application, which provides a direct access to recorded voice mail messages using a visual interface, wherein the visual interface typically presents a list of messages to the user for playback.

Alternatively, the called party 200 may call the voice mail system 430 via a respective phone number in communication steps 561 and 562, wherein an interactive voice response (IVR) system may be provided that allows the called party 200 to interact with the voice mail system 430 through the use of voice and/or DTMF tones input with a keypad.

The voice mail system 430 typically marks stored voice mail messages that have already been heard, so that the called party 200 can identify which voice mail messages have been heard. However, the calling party 100 is never aware, if and when a voice mail message that the calling party 100 has left, has been heard by the called party 200. Furthermore, if a pre-defined time limit for storing a voice mail message is exceeded, the voice mail system 430 deletes the respective voice mail message, even if it was not heard by the called party 200 at all.

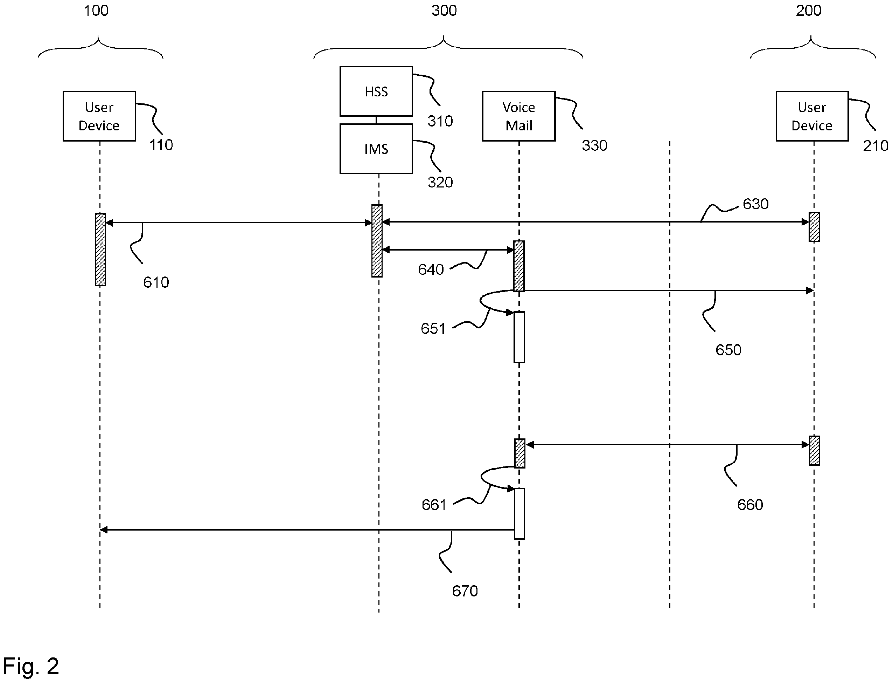

In order to improve this, the invention proposes to generate a confirmation information accessible by the calling party 100 in response to a voice message being accessed by the called party 200. Figures 2 to 5 exemplarily illustrate the working principle of different variants of a respectively modified voice mail system and corresponding methods.

Fig. 2 exemplarily illustrates a first variant of an improved method for managing voice mail messages, wherein the calling party 100 and the called party 200 are associated with the same telecommunication network provider 300 and with the same voice mail system 330.

In the variant shown in Fig. 2, the calling party 100 places a call to the called party 200, using the device 110 connected with the network of operator 300, which transmits the call to the device 210 of the called party 200. In communication step 610 the calling device 110 for example initiates the call by transmitting a session request message to the IMS 320, comprising the address of the called device 210, i.e. for example the respective phone number. In communication step 630, the session request message is transmitted from the IMS 320 to the user device 210 of the called party 200. The user device 210 signals the incoming call to the user, for example by ringing.

As described above, the user devices 110 and 210 may for example be VoIP capable devices, such as a telephone or a computer, or VoLTE capable mobile devices, and SIP may be used for the signaling for establishing the call.

In communication step 640, the call is forwarded to the voice mail system 330, because respective call forwarding conditions are met. The voice mail system 330 answers the call, so that a call connection is established. The calling party 100 then provides a voice message which is recorded by the voice mail system 330. When the recording of the message from the calling party 100 is finished, the voice mail system 330 stores the message in the voice mail box of the called party 200. This action may trigger a push notification to the called party, for example by transmitting, in communication step 650, a message from the voice mail system 330 to the user device 210 of the called party 200, using for example SMS (Short Message Service). Alternatively, the voice mail system 330 may also transmit a push notification to the user device 210, said push notification being processed by an application that is installed on the user device 210 or that is integrated in the operating system of the user device 210.

In the shown example, the action of storing the recorded message further triggers that in communication step 651 a copy of the recorded message is generated, which is stored in the voice mail box of the calling party 100. For this purpose, the voice mail system 330, which is used by both parties, is accordingly modified.

Furthermore, the functionality of voice mail system 330 is extended in such a way that a differentiation is enabled between received messages and copies of messages sent. Depending on the storage type, this may be realized in various ways. For example, if the messages are stored using IMAP (Internet Message Access Protocol), a database, or a file system, a special flag may be used to indicate whether the stored message is a received message or a sent message. Further, a special folder may be used for storing sent messages, if IMAP or a file system is used. A further alternative, usable for any storage type, is to integrate a logic into the voice mail system 300, which allows to differentiate between received and sent messages, wherein for example a message is identified as a copy, i.e. a sent message, if the stored sender number equals the number of the calling party, and otherwise a message is identified as a received message.

The called party 200 can access the voice mail system 330 in communication step 660 to request a recorded message that is stored in the voice mail box of the called party 200 and hear it on the device 210. For this purpose, a method and/or application may be used as described above with respect to communication step 560.

When a stored message has been heard by the called party 200, it is accordingly marked as having been heard, for example by storing a respective meta information that is associated with the respective stored message, wherein the meta information may be stored as a data structure or database record, which comprises a binary variable or flag for indicating whether the stored message has already been heard by the called party or not. The voice mail system 330 is adapted to allow a user to configure his or her voice mail box. In the shown example, the called party 200 may in particular configure its voice mail box to enable or disable the functionality that the called party is informed, if a message has been heard by the called party 200.

If this functionality is enabled, in response to the voice message being accessed by the called party 200, a confirmation information is generated which is accessible by the calling party 100. For this purpose, in communication step 661, when the original stored message is marked as having been heard, the copy of the message that is stored in the voice mail box of the calling party 100 may be marked correspondingly. In other words, when the original message stored in the voice mail box of the called party 200 gets flagged heard, i.e. a meta information associated with the original message is changed accordingly, this triggers a synchronization to the copied or cloned message that is stored in the voice mail box of the calling party 100, resulting in a meta information associated with the cloned message and stored in the voice mail box of the calling party 100 being changed correspondingly.

This change in the meta information of the cloned message may further trigger a notification being transmitted to the calling party 100 in communication step 670 to inform it that the called party heard the message, wherein this notification may for example be transmitted as an SMS to the user device 110 of the called party 100, or it may be transmitted by means of a push notification to an application or to the operating system of the user device 110 of the called party 100. That way, the confirmation information that the voice message has been accessed by the called party 200 is automatically pushed to the calling party 100.

Alternatively, in a pull mode, the calling party 100 may access its voicemail box to request the information whether the original message associated with a stored cloned message has been heard by the called party 200.

Cloning the message for the calling party 100 also enables the feature that the calling party 100 may access and replay its recorded message. It is to be noted, however, that if the calling party 100 replays a copy of a message, the heard flag of the stored copy of the message will not be changed. This is only done by the synchronization described above, when the called party 200 hears the original message, wherein the synchronization also is part of an extended functionality of the voice mail system 330. If the calling party 100 deletes a stored copy of an original message in its voice mail box, this does not affect the original message that is stored in the voice mail box of the called party. However, since with the cloned message also the associated meta information is deleted, triggering the synchronization would not have an effect. Typically, in that case also the notification in communication step 670 would not be done. Alternatively, in step 670 the notification could be sent combined with a second cloned message, so that the calling party 100 is aware which message is meant.

In order to associate an original voice message and a respective cloned voice message, preferably a respective identification information is used, wherein the identification information preferably is stored together with the recorded voice message in the voice mail box of the called party 200, and it is stored together with the copy of the recorded voice message in the voice mail box of the calling party 100, for example as part of a respective meta information.

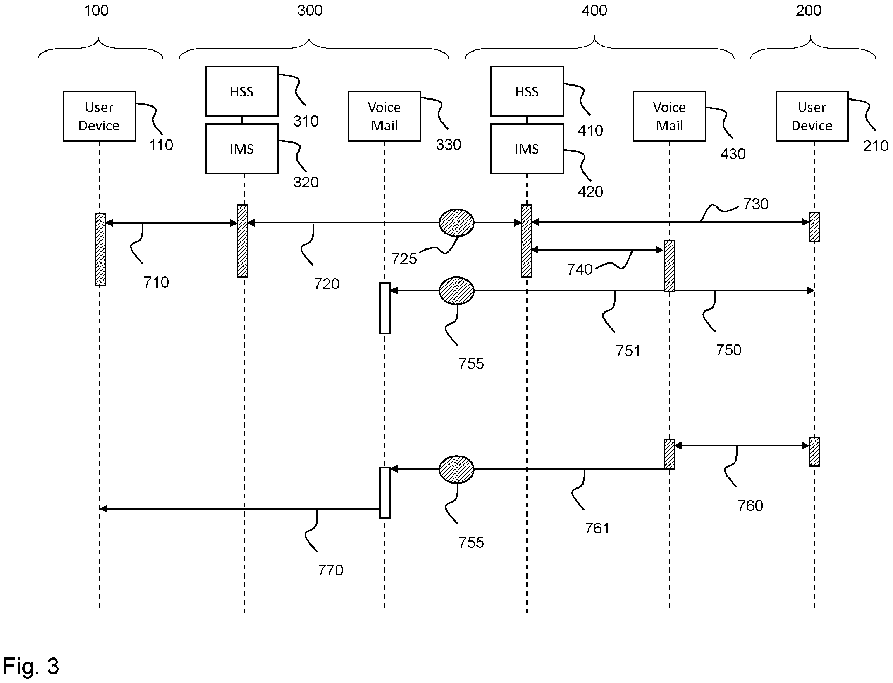

It is to be noted that in the example shown in Fig. 2, the telecommunications provider 300 serves both parties, i.e. calling party 100 and called party 200, whereas in the examples shown in Figures 3 to 5, of the two parties the telecommunications provider 300 or 300' only serves the calling party 100 and the telecommunications provider 400 only serves the called party 200.

Fig. 3 exemplarily illustrates a second variant of an improved method for managing voice mail messages, wherein the calling party 100 and the called party 200 are associated with different telecommunication network providers 300 and 400 and with respectively different voice mail systems 330 and 430. However, in the shown example, the voice mail systems 330 and 430 are interconnected via a gateway 755.

In the variant shown in Fig. 3, the call establishment is similar to that described above with respect to the prior art. Accordingly, the calling party 100 places a call to the called party 200, using the device 110 connected with the network of operator 300, wherein the network or operator 300 is interconnected with the network of operator 400 via gateway 725, e.g. a VoIP gateway, and wherein the network of operator 400 then transmits the call to the device 210 of the called party 200. In communication step 710 the calling device 110 initiates the call by transmitting a session request message to the IMS 320, comprising the address of the called device 210, i.e. for example the respective phone number. In communication step 720, the session request message is then transmitted from the IMS 320 via the gateway 725 to the IMS 420 and from there in communication step 730 to the user device 210 of the called party 200. The user device 210 signals the incoming call to the user, for example by ringing.

In communication step 740, the call is forwarded to the voice mail system 430, when respective call forwarding conditions are met. The voice mail system 430 answers the call, thereby establishing a connection with user device 110. The calling party 100 provides a voice message, which is recorded by the voice mail system 430. When the recording of the message from the calling party 100 is finished, the voice mail system 430 stores the recorded voice message in the voice mail box of the called party 200. This action triggers a push notification to the called party 200, for example by transmitting, in communication step 750, a message from the voice mail system 430 to the user device 210 of the called party 200, for example by means of an SMS or my means of a push notification to an application that is installed on the user device 210 or that is integrated in the operating system of the user device 210.

The action of storing the recorded message further triggers a copy of the recorded message being generated, transmitted to the voice mail system 330 and stored in the voice mail box of the calling party 100 in communication step 751. In the shown example, for this purpose the voice mail systems 330 and 430 are interconnected by means of gateway 755, which may for example be an API (Application Programming Interface) gateway or any other suitable standardized gateway adapted to enable mutual communication between the voice mail systems of the different networks.

In the same way as described above with respect to Fig. 2, the functionality of the voice mail system 330, associated with the calling party 100, is extended in such a way that a differentiation is enabled between received messages and copies of messages that were provided for a called party, wherein this functionality may be realized in various ways, e.g. by using a predetermined flag or folder or by using a respective logic, e.g. if the own number is either in the sender or receiver attribute.

Furthermore, also in this variant, an identification information is used for associating an original voice message with a respective cloned voice message, in particular for identifying and marking a cloned message, when the respective original message has been heard by the called party 200.

Since in the shown example different operators 300 and 400 are involved, for this purpose a respective alignment is required between the operators, wherein this can be done in different ways.

In a first example, as an identifier for the cloned message stored in the voice mail box of the calling party 100 the operator 300 uses a combination of an identifier which identifies the operator 400 and the message identifier used by the operator 400, wherein this combined identifier may preferably be stored as an additional attribute of the stored cloned message, supplementing an internal message identifier that is generally generated for each stored message.

In a second example, the voice mail system 330 of operator 300 may generate a unique identifier for the cloned message stored in the voice mail box of the calling party 100 and send this unique message identifier back to the voice mail system 430 of the operator 400 in response to receiving the cloned message in communication step 751. The voice mail system 430 of operator 400 then stores, associated with the original message, additional attributes preferably comprising an identifier identifying the operator 300 and the unique message identifier received from the voice mail system 330. As described above, when the original message is flagged heard, this is synchronized with the cloned message, wherein when transmitting an update in the synchronization the voice mail system 430 of operator 400 preferably also transmits the above additional attributes for identifying the cloned message that is to be updated.

As shown in Fig. 3, the called party 200 accesses the voice mail system 430 in communication step 760 to request a recorded message that is stored in the voice mail box of the called party 200 and hear it on the device 210.

For synchronization purposes, in communication step 761, when the original stored message is marked as having been heard, the copy of the message that is stored in the voice mail box of the calling party 100 may be marked correspondingly. In other words, when the original message stored in the voice mail box of the called party 200 gets flagged heard, i.e. a meta information associated with the original message is changed accordingly, this triggers a synchronization to the copied or cloned message that is stored in the voice mail box of the calling party 100, resulting in a meta information associated with the cloned message and stored in the voice mail box of the calling party 100 being changed correspondingly. In the shown example, this synchronization is performed using the interconnection 755 between the voice mail systems 330 and 430.

Similar to the above-described first variant, the change in the meta information of the cloned message may further trigger a notification being transmitted to the calling party 100 in communication step 770 to inform it that the called party heard the message, wherein this notification may for example be transmitted as an SMS to the user device 110 of the called party 100, or it may be transmitted by means of a push notification to an application or to the operating system of the user device 110 of the called party 100. Similar to the above-described first variant a second cloned message could be sent with the notification, so that the calling party 100 is aware which message is meant in case it deleted the first cloned message.

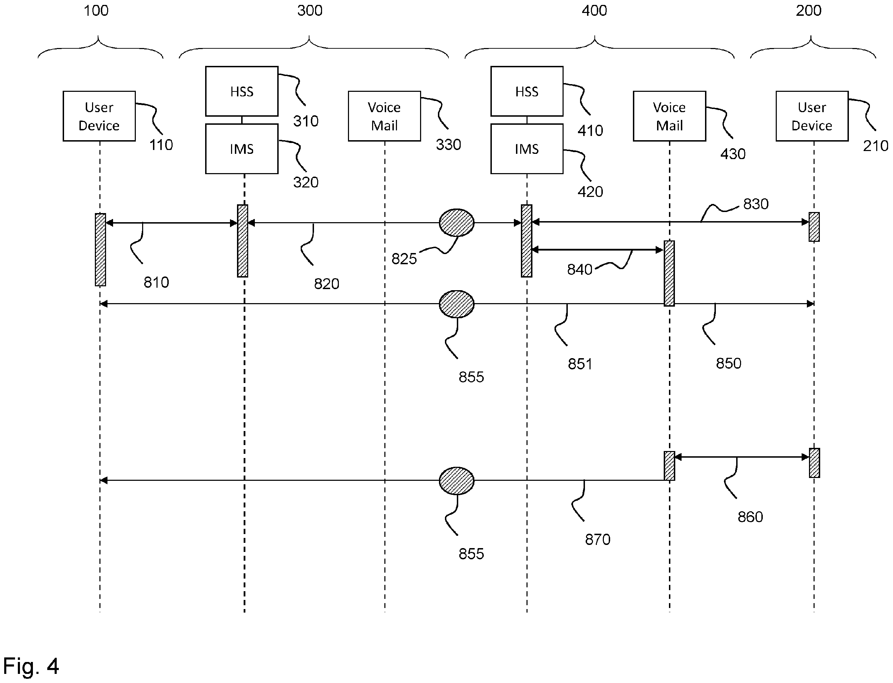

Fig. 4 exemplarily illustrates a third variant of an improved method for managing voice mail messages, wherein the calling party 100 and the called party 200 are associated with different mobile network providers 300 and 400. However, different from the variant described with reference to Fig. 3, in the shown example, the voice mail systems 330 and 430 are not interconnected.

In the shown example, the networks of operators 300 and 400 are interconnected for enabling classical mobile telecommunication services, such as telephony, SMS or RCS-e (Rich Communication Services enhanced).

Communication steps 810, 820, 830, 840 and 850 are similar to communication steps 710, 720 730, 740 and 750 as described above.

When the voice mail system 430 stores the recorded message in the voice mail box of the called party 200, it checks whether the calling party 100 uses the same voice mail system as the called party 200 and if different voice mail systems are used it checks whether an interconnection between the voice mail systems is available. If either is the case, it is proceeded as described above with reference to Figures 2 and 3, respectively.

If neither is the case, the action of storing the recorded message in the voice mail box of the called party 200 triggers a copy of the recorded message being generated by the voice mail system 430 and transmitted to the user device 110 of the calling party 100 in communication step 851, for example in the form of an audio file supplemented with respective meta data. The meta data may for example comprise a text to be displayed on the device 110, having the exemplary format "You recorded the following voicemail on <date> at <time> on the VoiceMail of <name> (<phone number>)" with the placeholders being respectively filled. The audio file with meta data may preferably be transmitted via an RCS-e or MMS (Multimedia messaging Service) message via a respective interconnection 855 between the networks of operators 300 and 400. That way, the calling party 100 may access a copy of messages provided for a voice mail box of a called party 200 and can hear it again, although not via his own voice mail system 330. For practical purposes, the voice mail system 430 may store, together with the recorded voice message, a channel information, which identifies the type of transmission channel used to transmit the copy of the recorded voice message, i.e. whether an RCS-e message, an MMS message or a different type of message has been used.

The transmitted RCS-e or MMS message typically comprises a message identifier, wherein the voice mail system 430 preferably stores this message identifier in an additional attribute associated with the stored original message, so that the voice mail system 430 may refer to the transmitted RCS-e or MMS message later on.

As shown in Fig. 4, the called party 200 accesses the voice mail system 430 in communication step 860 to request a recorded message that is stored in the voice mail box of the called party 200 and hear it on the device 210.

When the original stored message is marked as having been heard, this triggers a further message being transmitted form the voice mail system 430 via interconnection 855 to the device 110 of the calling party 100 in communication step 870. This further message informs the calling party 100 about the message being heard by the called party 200. It may be a RCS-e, SMS or MMS message and may comprise for example a text having the exemplary format "Your VoiceMail from <date> at <time> on the VoiceMail of <name> (<phone number>) got heard", with the placeholders being respectively filled.

This further message may be an independent message, but preferably it refers the earlier message with which the copy of the recorded voice message has been provided to the device 110 of the calling party 100, e.g. by using the message identifier of the earlier RCS-e or MMS message. When using certain messaging protocols, such as RCS-e, for the message identifier a field called "Contribution-ID" may be used, wherein the voice mail system 430 in the further message may for example refer to the Contribution-ID of the earlier message by using a field called "InReplyTo-Contribution-ID", thereby enabling a respective message client installed on the user device 110 to group both messages together.

There are different options for the phone number, which the voice mail system 430 may use as sender of the RCS-e or MMS message, with which the copy of the voice message is provided. In particular, either a service number may be used or the number of the called party, both having advantages and disadvantages. While a service number with advantage clearly indicates that it is a message from an operator, it is a disadvantage that all messages from that operator, which comprise cloned voice messages, would come with the same number, even if they are associated with different called parties. This may confuse the calling party or make the use unhandy.

On the other hand, using the number of the called party with advantage separates messages comprising cloned voice messages from different called parties, but it is a disadvantage that they might mix with other RCS-e or MMS messages sent from the respective called party 200. This may confuse the calling party 100, since the calling party 100 might erroneously think that a received message, which comprises a cloned voice message provided by the calling party 100 itself, has been created by the called party 200.

In a preferred further alternative, an own number may be provided for the voice mail box of the called party 200, which can be directly called. When using this number, it clearly shows that these messages are the messages, which comprise a cloned voice message, and furthermore, each called party is separated. Those numbers may with advantage be constructed based on the original number of the called party, like it is defined in the German number plan for mobile operator phone numbers, wherein a defined infix of two digits is inserted at a defined position, thus creating a new number, which directly addresses the correlated voice mail box.

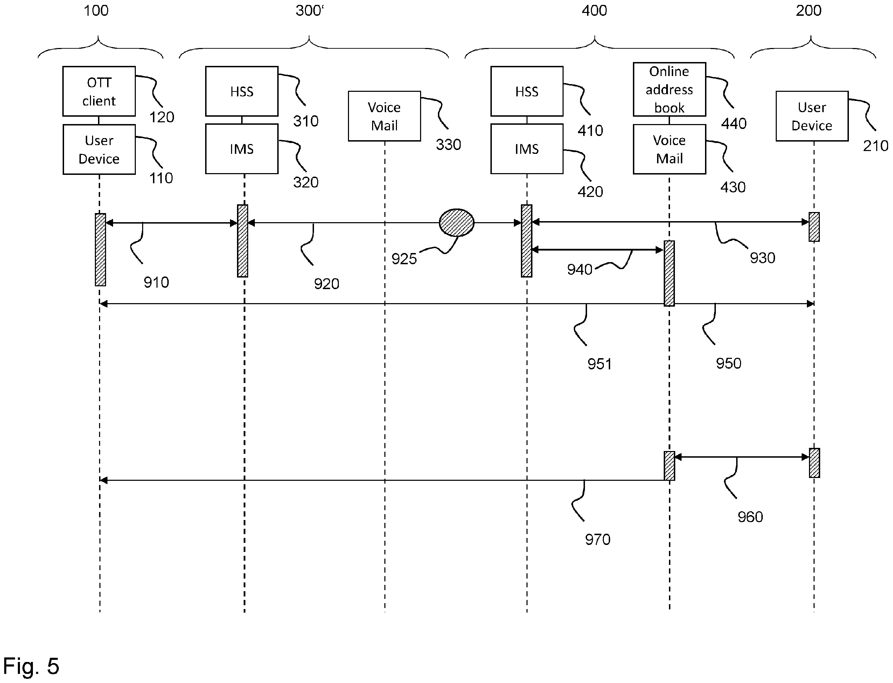

Fig. 5 exemplarily illustrates a fourth variant of an improved method for managing voice mail messages, wherein the calling party 100 and the called party 200 are associated with different network operators 300' and 400, wherein the voice mail systems 330 and 430 are not interconnected, and wherein the network of operator 400 comprises a mobile network, but the network of operator 300' does not comprise a mobile network. In such a scenario, the networks of operators 300' and 400 are not interconnected on the basis of mobile communication services such as RCS-e, SMS or MMS.

Communication steps 910, 920, 930, 940 and 950 nevertheless are similar to communication steps 710, 720 730, 740 and 750 as described above.

When the voice mail system 430 stores the recorded message in the voice mail box of the called party 200, it checks what kind of communication with respect to the calling party 100 is available. If the voice mail system 430 recognizes that there is no interconnection to the voice mail system 330 associated with the calling party 100, and that the network of operator 300' is not a mobile network, which in particular does not support messaging services such as SMS, MMS or RCS-e, but for example a fixed line network, it may still provide a copy of a recorded voice message, so that the calling party 100 may access it.

Thus, in the shown example, the action of storing the recorded message in the voice mail box of the called party 200 triggers a copy of the recorded message being generated by the voice mail system 430 and transmitted to the user device 110 of the calling party 100 in communication step 951, for example in the form of an audio file supplemented with respective meta data, e.g. comprising a text having the exemplary format "You recorded the following voicemail on <date> at <time> on the VoiceMail of <name> (<phone number>)" with the placeholders being respectively filled, wherein as a transmission channel email communication or any other OTT (Over-the-top) messenger may be utilized. That way, also in this scenario, the calling party 100 may have access to a copy of the recorded voice message and may hear it again.

Preferably, the voice mail system 430 stores an information on the used transmission channel and address together with the recorded voice message, i.e. a channel information, which identifies the type of transmission channel used to transmit the copy of the recorded voice message, and the respective address used for the transmission, wherein the address depends on the used channel.

For enabling the user device 110 to receive the cloned message via the selected transmission channel, a respective OTT client 120 is installed on the user device 110, e.g. an OTT messenger client or an email client.

As shown in Fig. 5, the called party 200 accesses the voice mail system 430 in communication step 960 to request a recorded message that is stored in the voice mail box of the called party 200 and hear it on the device 210. When the original stored message is marked as having been heard, this triggers a further message being transmitted from the voice mail system 430 via the selected transmission channel to the device 110 of the calling party 100 in communication step 970.

This further message informs the OTT client 120 on the user device 110 of the calling party 100 about the message being heard by the called party 200 and may comprise for example a text having the exemplary format "Your VoiceMail from <date> at <time> on the VoiceMail of <name> (<phone number>) got heard", with the placeholders being respectively filled.

There are various options to identify the sender of the OTT messages, for example the phone numbers mentioned above with respect to the third variant. When suing email as transmission channel, similar approaches are possible, i.e. the email address of the called party 200 may be used. Alternatively, a service email address of the operator 400 may be used. A further alternative is to construct an address based on the phone number of the called party, e.g. in the format <phone number>@<operator domain>.

When the used OTT messenger supports message reference, the same mechanism as described above with respect to RCS-e may be used, so that the messenger client 120 may group together the message informing about a voice message being heard by the called party 200 and the message, with which the cloned voice message had been provided.

In order to identify a communication channel like email or OTT messaging as a usable transmission channel, the voice mail system 430 preferably has access to information for resolving the calling party's phone number to these channels. In the shown example, this is provided by the called party 200 with an online address book 440, to which the voice mail system 430 has access. Such an online address book 440 may be hosted as a service by operator 400 or another OTT service provider, wherein the called party 200 allows access for the operator 400, e.g. via OAuth2.

With the invention a calling party that leaves a voice message in a voice mail box of a called party with advantage is enabled to access a confirmation information, which is generated when the recorded voice message has been accessed by the called party. Preferably, the confirmation information is provided to the calling party automatically using a push notification. The calling party preferably is further enabled to access and hear again a voice message that the calling party has left in a voice mail box of a called party.

Accordingly, the invention preferably provides a technical push information to a calling party about the event that the called party heard the recorded voice mail message of the calling party and/or a technical replication of the recorded voice mail message from the voice mail box of the called party, so that it is also available to the calling party to hear it again.

## Claims

1. A method, comprising
a) placing a call from a calling party (100) to a called party (200),
b) forwarding the call to a voice mail system (430), which operates a voice mail box of the called party (200),
c) recording a voice message provided by the calling party (100) and storing the recorded voice message in the voice mail box of the called party (200), and
d) accessing the stored voice message by the called party (200), wherein
a copy of the recorded voice message is generated (651, 751) and access to the copy of the recorded voice message is made available to the calling party (100) and/or
in response to the voice message being accessed by the called party (200), a confirmation information is generated, which is accessible by the calling party (100).

2. The method of claim 1, wherein the method comprises transmitting a push information (670, 770, 870, 970) to the calling party (100).

3. The method of any one of the preceding claims, wherein the copy of the recorded voice message is stored in a voice mail box (330) of the calling party (100).

4. The method of claim 3, wherein the calling party (100) and the called party (200) are associated with the same telecommunications provider (300), and wherein the voice mail system (330) of the telecommunications provider (300) associated with the called party (200) copies the voice message stored in the voice mail box of the called party (200) and stores it in the voice mail box of the calling party (100).

5. The method of any one of claims 1 to 3, wherein the calling party (100) and the called party (200) are associated with different telecommunications providers (300, 400), and wherein the voice mail system (430) of the telecommunications provider (400) associated with the called party (200) copies the voice message stored in the voice mail box of the called party (200) and transmits the copy of the recorded voice message
- to a voice mail system (330) of the telecommunications provider (300) associated with the calling party (100) via a standardized interface (755), wherein the copy of the recorded voice message is stored in the voice mail box of the calling party (100), and/or
- to the calling party (100) within a message (851, 951), wherein the copy of the recorded voice message is stored in a device (110) of the calling party (100), and wherein the message (851, 951) is transmitted using a transmission channel based on
- Rich Communication Services enhanced (RCS-e),
- Multimedia Messaging Service (MMS),
- e-mail, or
- Over-the-Top (OTT) Messaging.

6. The method of any one of the preceding claims, wherein the recorded voice message and the copy of the recorded voice message are associated using an identification information, wherein
- the identification information is stored together with the recorded voice message in the voice mail system (430) associated with the called party (200),
- the identification information is stored together with the copy of the recorded voice message in the voice mail system (330) associated with the calling party (100), and/or
- the identification information is stored in a device (110) of the calling party (100), and wherein
in particular the confirmation information accessible by the calling party (100) comprises the identification information.

7. The method of any one of the preceding claims, wherein the voice mail system (430) associated with the called party (200) stores, together with the recorded voice message, a channel information, which identifies the type of transmission channel used to transmit the copy of the recorded voice message and/or used to transmit the confirmation information to the calling party (100).

8. The method of any one of the preceding claims, wherein the voice mail system (430) associated with the called party (200) identifies a transmission channel to be used to transmit the copy of the recorded voice message and/or to transmit the confirmation information by looking up the calling party's phone number in an online address book (440), wherein the online address book (440) is associated with the called party (200).

9. The method of any one of the preceding claims, wherein, if the calling party no longer has access to the copy of the recorded voice message,
- a further copy of the recorded voice message is generated and access to the further copy of the recorded voice message is made available to the calling party (100), when, in response to the voice message being accessed by the called party (200), the confirmation information is generated that is accessible by the calling party (100),
or
- in response to the voice message being accessed by the called party (200), no confirmation information is generated.

10. Voice mail system (330, 430), wherein
- the voice mail system is adapted to record a voice message provided by a calling party (100) and to store the recorded voice message in a voice mail box of a called party (200), wherein the voice mail box of the called party (200) is operated by the voice mail system, and wherein
- the voice mail system is adapted to generate a copy of the recorded voice message (651, 751), and to provide access to the copy of the recorded voice to the calling party (100), and/or
- the voice mail system is adapted to generate, in response to the voice message being accessed by the called party (200), a confirmation information accessible by the calling party (100).

11. The voice mail system of claim 10, adapted to transmit a push information (670, 770, 870, 970) to the calling party (100).

12. The voice mail system of any one of claims 10 or 11, wherein
- the voice mail system is adapted to store a copy of the recorded voice message in a voice mail box of the calling party (100),
- the voice mail system (430) is adapted to transmit, via a standardized interface (755), a copy of the recorded voice message to a voice mail system (330) of a telecommunications provider (300) associated with the calling party (100), and/or
- the voice mail system is adapted to transmit a copy of the recorded voice message to the calling party (100) within a message (851, 951), using a transmission channel based on
- Rich Communication Services enhanced (RCS-e),
- Multimedia Messaging Service (MMS),
- e-mail, or
- Over-the-Top (OTT) Messaging.

13. The voice mail system of any one of claims 10 to 12, wherein the voice mail system is adapted to generate and store an identification information, which is associated with the recorded voice message and with the copy of the recorded voice message, and to store the identification information together with the copy of the recorded voice message in the voice mail box of the calling party (100) and/or to transmit the identification information together with the copy of the recorded voice message.

14. The voice mail system of any one of claims 10 to 13, adapted to store, together with the recorded voice message, a channel information, which identifies the type of transmission channel used to transmit the copy of the recorded voice message, and/or
adapted to identify a transmission channel to be used to transmit the copy of the recorded voice message and/or to transmit the confirmation information by looking up the calling party's phone number in an online address book (440), wherein the online address book (440) is associated with the called party (200).

15. The voice mail system of any one of claims 10 to 14, adapted to receive an information indicating that the calling party no longer has access to the copy of the recorded voice message and in response
- to generate a further copy of the recorded voice message and to provide access to the further copy of the recorded voice to the calling party (100), when, in response to the voice message being accessed by the called party (200), the confirmation information is generated that is accessible by the calling party (100),
or
- to generate no confirmation information in response to the voice message being accessed by the called party (200).
